# EUROPÄISCHE PATENTSCHRIFT

(11) **EP 0 356 848 B1**
(45) Veröffentlichungstag und Bekanntmachung des Hinweises auf die Patenterteilung: **06.10.1993**
(21) Anmeldenummer: 89115329.8
(22) Anmeldetag: 19.08.1989
(51) Int. Cl.: C09D 175/04, C08F 299/06, C08J 3/03, C08G 18/48, C08G 18/67

(54) **Wasserdispergierbare Allylurethane Verfahren zu deren Herstellung und ihre Verwendung zur Herstellung von Lacken**
Water dispersible allylurethanes method for their production and use thereof for the production of lacquers
Uréthanes allyliques dispersibles dans l'eau leur procédé de préparation et leur utilisation pour la production de vernis

(30) Priorität: 01.09.1988 DE 3829588
(43) Veröffentlichungstag der Anmeldung: 07.03.1990
(73) Patentinhaber: Wolff Walsrode Aktiengesellschaft, D-29655 Walsrode (DE)
(72) Erfinder: Piepho, Michael, Dr., D-3210 Elze (DE); Hoppe, Lutz, Dr., D-3030 Walsrode (DE); Lühmann, Erhard, Dipl.-Ing., D-3036 Bomlitz 1 (DE)
(74) Vertreter: Zobel, Manfred, Dr.

(56) Entgegenhaltungen:
- EP-A- 0 012 370
- DE-A- 2 256 803
- DE-A- 3 437 918
- US-A- 3 686 147
- US-A- 4 760 111

## Beschreibung

Die Erfindung betrifft neue wasserdispergierbare Allylurethane, ein Verfahren zu ihrer Herstellung und ihre Verwendung zur Herstellung von Lacken.

In der jüngeren Vergangenheit läßt sich in der Lackindustrie eine verstärkte Zuwendung zu umweltfreundlichen (d.h. lösungsmittel- und monomerfreien) Produkten beobachten (vergl. z.B. O. Lückert, Emissionsarm Lackieren, C.R. Vincentz-Verlag, Hannover, 1987). Zur Erzielung von elastischen, abriebfesten Beschichtungen mit zähharten Eigenschaften sind urethangruppenhaltige Lackrohstoffe bekannt. Solche Polyurethan-Produkte werden z.B. in Form von strahlenhärtbaren Urethanacrylaten angewendet (vergl. z.B. M.S. Salim, Polymers Paint Colour Journal, 177, Nov. 1987, 760, und W. Fischer, Industrie-Lackierbetrieb, 55, 1987, Nr. 7, S. 245). Derartige Lacke (Polyurethanacrylate), die mit Reaktivverdünnern auf Basis von niedermolekularen Acrylsäureestern verdünnt werden, können jedoch physiologische Nachteile aufweisen, da Acrylate Hautreizungen verursachen können. Dieses gilt insbesondere für die zur Einstellung einer verringerten Lackviskosität üblichen Reaktivverdünner auf Basis von Acrylestern.

Eine andere Möglichkeit zur Einstellung der Verarbeitungsviskosität von Urethanacrylaten besteht in der Mitverwendung von inerten organischen Lösungsmitteln, die nach Applizierung der Beschichtungsmassen vor der chemischen Härtung der Bindemittel verdunsten und dadurch die Luft belasten (vergl. CA-PS 1 192 331).

An acrylatfreien Produkten zur Beschichtung von Oberflächen sind in Styrol gelöste, ungesättigte Polyester auf dem Markt, die jedoch aufgrund physiologischer Nachteile von Styrol immer weniger eingesetzt werden. Das umweltfreundlichste und physiologisch unbedenklichste Verdünnungsmittel zur Einstellung der Verarbeitungsviskosität von Lackbindemitteln ist Wasser. In der DE-A-3 437 918 werden wasserverdünnbarere Oligourethanacrylate für Lederlackierungen beschrieben, die jedoch nicht zur offenporigen Holzlackierung geeignet sind.

Acrylatfreie, wasserverdünnbare, polymerisierbare Lackbindemittel werden in der EP-A-0 182 147 beschrieben. Die hierin beschriebenen Punkte genügen jedoch nicht den gestiegenen Anforderungen an die Elastizität, Porenfluß und optischen Eigenschaften.

Wasserdispergierbare, urethangruppenhaltige Lackbindemittel, die acrylatfrei und polymerisierbar sind, werden auch in der DE-OS 2 256 806 beschrieben. Die Produkte eignen sich jedoch nicht zur offenporigen Beschichtung von Holz und sind außerdem nur nach Zusatz von aminischen Basen emulgierbar. Derartige Produkte sind nicht ausreichend lagerstabil (H. Blum et al, Farbe + Lack, 94, 342 (1988)). Ein weiterer großer Nachteil dieser Produkte ist, daß bei der Anwendung ein Einbrennvorgang notwendig ist, bei dem die Amine verdampfen.

Aufgabe der vorliegenden Erfindung war es, wasserdispergierbare polymerisierbare Verbindungen herzustellen, die als Lackbindemittel geeignet sind, insbesondere zum Herstellen zähelastischer sowie offenporiger Holzüberzüge, die nur wenig in den Holzuntergrund penetrieren.

Gegenstand der Erfindung sind wasserdispergierbare Allylurethane aus jeweils wenigstens einer Allylverbindung, einem Polyol und einem Isocyanat erhältlich durch Umsetzung von 0,15 Mol Hydroxylgruppen eines Vorproduktes A hergestellt aus
1. 0,03 - 0,1 Mol eines Polyethylenglykols mit einem Molekulargewicht von wenigstens 200, aber kleiner als 1000,
2. 0,002 - 0,02 Mol eines Polyethylenglykols mit einem Molekulargewicht von 1000 bis 5000,
3. 0,00 - 0,3 Mol eines ggf. verzweigten Polypropylenglykols mit einem Molekulargewicht von 200 bis 1000 und
4. 0,0 - 0,25 Mol einer Polycarbonsäure oder eines Polycarbonsäure-Derivates
   in einem Reaktionsschritt B mit
5. 0,05 - 0,35 Mol der Hydroxyallylverbindung III, und
6. 0,1 - 0,5 Mol Isocyanatgruppen der Isocyanatverbindung IV,
wobei sämtliche Isocyanatgruppen mit Hydroxylgruppen umgesetzt werden.

Im Polyolgemisch I liegt das Molverhältnis von Polyolen mit einem Molekulargewicht kleiner als 1000 zu Polyolen mit einem Molekulargewicht von wenigstens 1000 zwischen 10 und 50, insbesondere zwischen 20 und 40. Das Molekulargewicht ist für die Zwecke der vorliegenden Erfindung definiert als Gewichtsmittel M_{w}.

In einer weiteren Ausführungsform wird das oben angegebene Polyglykolgemisch I mit einer nicht aromatischen ungesättigten Carbonsäure mit wenigstens zwei Carboxylgruppen, insbesondere einer Dicarbonsäure oder dem entsprechenden Anhydrid umgesetzt.

Die erfindungsgemäßen wasserdispergierbaren Allylurethane weisen vorzugsweise folgende Eigenschaften auf:

### Molekulargewicht: 1.500 - 10.000

Viskosität (Dimension: mPa.s), gemessen gemäß DIN: 53 019 T 1: >3000 bei 20°C in unverdünntem Zustand.

Die erfindungsgemäßen Allylurethane sind erhältlich durch Umsetzung des Vorproduktes A, welches seinerseits erhältlich ist durch Umsetzung von
1. 0,03 - 0,1 Mol Polyethylenglykol mit einem Molekulargewicht von wenigstens 200, aber kleiner als 1000, gegebenenfalls verzweigt,
   vorzugsweise
   0,04 - 0,07 Mol Polyethylenglykol 300 - 600
2. 0,002 - 0,02 Mol Polyethylenglykol 1000 - 5000, gegebenenfalls verzweigt,
   vorzugsweise
   0,003 - 0,008 Mol Polyethylenglykol 1500 - 3000
3. 0,00 - 0,3 Mol Polypropylenglykol 200 - 1000 bzw. verzweigte Polypropylenglykole,
   vorzugsweise
   0,05 - 0,2 Mol
4. 0,0 - 0,25 Mol Polycarbonsäure oder Polycarbonsäureanhydrid,
   vorzugsweise
   0,1 - 0,18 Mol.

Das Vorprodukt A enthält nach Umsetzung der oben angegebenen Komponenten 1 bis 4 aufgrund eines stöchiometrischen Überschuß von Hydroxylgruppen gegenüber den Carboxylgruppen OH-Endgruppen.

Die erfindungsgemäßen Allylurethane sind nun erhältlich durch weitere Umsetzung des Vorproduktes A in einem zweiten Reaktionsschritt B. Hierbei werden 0,15 Mol Hydroxylgruppen des Vorproduktes A umgesetzt mit
5. 0,05 - 0,35 Mol der Hydroxyallylverbindung III, insbesondere mit
   0,1 - 0,2 Mol der Hydroxyallylverbindung III und
6. 0,1 - 0,5 Mol NCO-Gruppen der Isocyanatverbindung IV, insbesondere mit
   0,16 - 0,32 Mol NCO-Gruppen der Isocyanatverbindung IV,
wobei durch komplette Umsetzung mit den Hydroxylgruppen kein Restgehalt an Isocyanatgruppen verbleibt.

Gegenstand der Erfindung ist weiterhin ein Verfahren zur Herstellung der erfindungsgemäßen Allylurethane durch Umsetzung eines Vorproduktes A, enthaltend das oben angegebene Polyglykolgemisch I und gegebenenfalls eine Polycarbonsäure II oder ein Derivat IIa davon mit
D) einer Hydroxyallylverbindung III und einem Isocyanat IV mit wenigstens zwei Isocyanatgruppen, wobei das erhaltene Allylurethan nicht ionisch ist.

Gegenstand der Erfindung ist weiterhin die Herstellung eines Lackes, enthaltend die erfindungsgemäßen Allylurethane in wasserdispergierter Form und ein Verfahren zur Lackierung starrer oder flexibler Substrate mit einem Lack, welcher ein erfindungsgemäßes Allylurethan enthält.

Bei der Herstellung des Vorproduktes A unter Verwendung einer Polycarbonsäure kondensiert man in der Schmelze (vergl. z.B. D. Braun, H. Cherdron, W. Kern, Praktikum der makromolekularen organischen Chemie, Hüthig-Verlag, Heidelberg, 3. Aufl., 1979, S. 69) verschiedene hydrophile und hydrophobe Polyalkylenglykole in Kombination mit Polycarbonsäuren bzw. den entsprechenden Anhydriden (bevorzugt Maleinsäureanhydrid) bei Temperaturen von ca. 150 bis 250°C, gegebenenfalls unter Vakuum.

Als Katalysatoren können konzentrierte Mineralsäuren wie Salzsäure oder Sulfonsäuren wie para-Toluolsulfonsäure verwendet werden. Anstelle von 2. können auch Ethylenoxid- / Propylenoxid-Copolymere verwendet werden.

Bevorzugte Polyglykole sind Polymerisate von Ethylenoxid und/oder Propylenoxid, wobei auch Pfropfpolymerisate von Propylenoxid oder Ethylenoxid auf mehrwertige Alkohole einsetzbar sind, d.h. verzweigte Polyalkylenglykole. Geeignete mehrwertige Alkohole sind z.B. Trimethylolpropan, Glycerin, Sorbit und Pentaerythrit.

Bevorzugte Polycarbonsäuren II sind Maleinsäure, Phthalsäure, hydrierte Phthalsäure, Adipinsäure, Bernsteinsäure, Fumarsäure, Malonsäure, Valeriansäure und Itaconsäure bzw. Derivate IIa davon, insbesondere Anhydride, aber auch OH-substituierte Polycarbonsäuren IIa. Besonders bevorzugtes Derivat IIa ist Maleinsäureanhydrid.

Bevorzugte Hydroxyallylverbindungen III sind Trimethylolpropanmonoallylether, Trimethylolpropandiallylether, Pentaerithritdiallylether, Pentaerithrittriallylether, Glycerinmonoallylether und/oder Glycerindiallylether. Bevorzugt ist Trimethylolpropandiallylether. Auch Allylalkohol kann verwendet werden, ebenso Methallylverbindungen und Allylgruppen enthaltende Saccharidderivate.

Bevorzugte Isocyanate IV sind Isophorondiisocyanat, Trimethylhexamethylendiisocyanat, Hexamethylendiisocyanat, Dicyclohexylmethandiisocyanat, MDI (Diphenylmethandiisocyanat), TDI (Toluylendiisocyanat), Trans-1,4-cyclohexandiisocyanat und Para-phenylendiisocyanat. Alle genannten Diisocyanate können auch als präpolymere Isocyanate eingesetzt werden, z.B. als Biuret oder Uretdion (vergl. G. Oertel, Polyurethane, Carl Hanser Verlag, 1985). Aliphatische oder cycloaliphatische Isocyanate sind insbesondere zur Verbesserung der Lichtstabilität geeignet.

Die Reaktion zwischen Isocyanat- und Hydroxylgruppen kann durch übliche Reaktionsbeschleuniger wie z.B. Dibutylzinndilaurat oder tertiäre Amine wie z.B. Dimethylbenzylamin oder Diazabicyclooctan katalysiert werden. Weiterhin kann das Reaktionsgemisch zur Verhinderung vorzeitiger Polymerisation der Allylgruppen Inhibitoren wie z.B. Hydrochinonderivate oder Phenothiacin enthalten. Die Herstellung kann in der zweiten Stufe in einem inerten Lösungsmittel erfolgen, das nach Beendigung der Reaktion (erkenntlich daran, daß im Infrarotspektrum des Reaktionsgemisches kein NCO-Signal mehr auftritt), wieder abdestilliert werden kann.

Man erhält ein acrylatfreies Lackbindemittel mit Urethanbindungen und Allyl- und/oder Methallylethereinheiten, welches wasserverdünnbar und radikalisch polymerisierbar ist. Eine Neutralisation überschüssiger Carboxylgruppen mit Aminen ist zur Erreichung der Wasserverdünnbarkeit nicht erforderlich. Die Polymerisation (gleichbedeutend mit Lackhärtung) erfolgt vorzugsweise durch Bestrahlung mit energiereichem Licht wie z.B. UV-Licht oder Elektronenstrahlen. Auch eine Härtung durch Zusatz von Peroxiden oder Azoverbindungen ist möglich, ebenso sikkativische Trocknungen. Die Lackbindemittel weisen viele Vorzüge (z.B. guten Verlauf und Kratzfestigkeit) von Urethanacrylaten bzw. von Zweikomponenten-Polyurethanlacken auf, ohne deren Nachteile (physiologisch nicht unbedenkliche Isocyanate oder Acrylsäureestereinheiten) zu besitzen. Die erfindungsgemäßen Lackbindemittel können mit weiteren üblichen Lackrohstoffen kombiniert werden, wie z.B. Nitrocellulose, Polyacrylatharzen, Alkydharzen, ungesättigten Polyestern, weiteren strahlenhärtbaren Komponenten, weiteren Lackbestandteilen wie Verlaufhilfsmitteln, Entlüftungsmitteln, Mattierungsmitteln und Pigmenten. Die Verdünnung auf Verarbeitungsviskosität erfolgt bevorzugt durch Zusatz von Wasser, aber auch die Verwendung von organischen Verdünnungsmitteln ist möglich. Darunter werden inerte organische Lösungsmittel verstanden, aber auch handelsübliche Reaktivverdünner (Acrylsäureester, Vinylether oder sonstige niedrigviskose CC-Doppelbindungen-enthaltende Verdünner). Beispiele für niedrigviskose Acrylsäureester sind Tripropylenglykoldiacrylat oder -methacrylat, Beispiele für niedrigviskose Vinylether sind Tetraethylenglykoldivinylether und Tripropylenglykoldivinylether.

### Beispiel 1

0,055 Mol Polyethylenglykol 400 (22 g),
0,005 Mol Polyethylenglykol 2000 (10 g),
0,11 Mol tripropoxyliertes Trimethylolpropan (34 g),
0,2 g Di-tertiär-butylhydrochinon,
0,8 g konzentrierte Salzsäure und
0,153 Mol Maleinsäureanhydrid (15 g)
werden in einem Glaskolben unter Stickstoffeinleitung 1 h auf 170°C unter Rühren erhitzt. Das Kondensationswasser (2,7 ml) wird dabei entfernt. Zu dem auf diese Weise erzeugten hydroxylgruppenhaltigen Vorprodukt A wird nach Abkühlung
0,144 Mol Isophorondiisocyanat (32 g) sowie
0,144 Mol Trimethylolpropandiallylether (30,8 g)
gegeben, wobei man zunächst den Allylether dem Vorprodukt A zusetzt und anschließend das Diisocyanat in einer Geschwindigkeit eintropft, daß die Reaktionsmischung nicht wärmer als 80°C wird. Nach beendeter Zugabe erhitzt man noch 90 min auf 70°C und läßt anschließend das emulgierbare Allylurethan-Produkt abkühlen. Durch Einrühren in 140 ml Wasser erhält man eine stabile 50 %ige Dispersion.

Nach Zusatz von 3 % (bezogen auf Festkörper) Fotoinitiator (Benzophenon/2-Hydroxy-2-methyl-1-phenyl-propan-1-on = 1/1) und Auftragen auf Holz (2 x 15 µ Trockenschichtdicke mit Zwischenschliff) wird nach Verdunsten des Wassers und anschließender UV-Bestrahlung ein trübungsfreier, offenporiger, kratzfester Film erhalten. Die Beschichtung zeigt eine ausgezeichnete Fülle sowie einen guten Verlauf. Die Pendelhärte nach König (gemessen mit 45 µ Trockenschichtdicke auf Glas) beträgt 50 sec. Der durch UV-Licht gehärtete Film ist beständig gegen die organischen Lösungsmittel Ethanol (60 min) und Aceton (10 s), (entsprechend Beanspruchungsgruppe 1 B, DIN 68 861, Teil 1, Ausgabe 12/81).

### Beispiel 2

Es wird analog zu Beispiel 1 gearbeitet, jedoch mit dem Unterschied, daß anstelle von Isophorondiisocyanat 0,144 Mol Hexamethylendiisocyanat (24,2 g) eingesetzt werden. Das erhaltene Produkt ist in Wasser emulgierbar. Die Pendelhärte nach König des 45 µ (trocken) auf Glas aufgerakelten und UV-gehärteten Filmes wurde zu 45 sec, bestimmt. Der Lackfilm war trübungsfrei.

Mit 2 x 15 µ Trockenschichtdicke, aufgerakelt auf Holz, erhält man Beschichtungen, die nur sehr wenig in den Holzuntergrund eindringen (gute Fülle) und dennoch eine offenporige Oberfläche ergeben. Der Verlauf ist sehr gut, die ausgehärtete Beschichtung ist kratzbeständig und beständig gegen Ethanol und Aceton (wie in Beispiel 1).

### Beispiel 3

Es wird analog Beispiel 1 gearbeitet, jedoch mit dem Unterschied, daß folgende Rohstoffmengen eingesetzt werden:

### Teilschritt A:

0,0625 Mol Polyethylenglykol 400 (25 g)
0,005 Mol Polyethylenglykol 2000 (10 g)
0,075 Mol tripropoxyliertes Trimethylolpropan (22,5 g)
0,13 Mol Maleinsäureanhydrid (12,5 g)
0,1 g Di-tertiär-butylhydrochinon
0,8 g konzentrierte Salzsäure

### Teilschritt B:

0,1 Mol Trimethylolpropandiallylether (21,5 g)
0,1 Mol Isophorondiisocyanat (22,2 g).

Das Reaktionsprodukt ist in Wasser stabil emulgierbar und läßt sich, wie in Beispiel 1 beschrieben, auf Glas bei einer Trockenschichtdicke von 45 µ zu glatten, kratzfesten Filmen mit einer Pendelhärte (nach König) von ca. 45 s härten.

Nach Auftragen auf Holz (2 x 15 µ Trockenschichtstärke mit Zwischenschliff) wurden offenporige Beschichtungen erhalten, die nur sehr wenig in den Holzuntergrund penetrieren (gute Fülle). Die Beschichtungen zeigen zähelastische Eigenschaften, sind sehr abriebbeständig und beständig gegen Ethanol und Aceton (wie in Beispiel 1).

### Vergleichsbeispiel

Beispiel 5 der EP-A-0 182 147 wurde nachgearbeitet.

Die Produkte der erfindungsgemäßen Beispiele 1 bis 3 dieser Patentanmeldung und das Produkt aus dem Vergleichsbeispiel wurden in Wasser zu Dispersionen mit 50 % Festkörper dispergiert (zu 250 g Produkt wurden bei 250 U/min 250 ml Wasser getropft und anschließend 30 min bei 2.500 U/min nachdispergiert).

Die Dispersionen wurden mit 1,5 % Fotoinitiatoren (Benzophenon/2-Hydroxy-2-methyl-1-phenylpropan-1-on = 1/1) versetzt und mittels eines Kastenrakels zweimal 15 µ stark (mit Zwischenschliff) auf Fichtenholz aufgetragen und mittels eines Düsentrockners getrocknet. Die Lackhärtung erfolgte nach Trocknung der Filme durch Bestrahlung mit UV-Licht (80 W/cm Leistung).

Weiterhin wurden die Dispersionen 30 µ stark auf Papier aufgetragen, getrocknet und durch UV-Licht gehärtet. Zwar werden gemäß Vergleichsbeispiel vergleichbare Werte bei Härtungsgeschwindigkeit, Verlauf, Kratzfestigkeit und Schleifbarkeit sowie Dispersionsstabilität erhalten, jedoch sind die erfindungsgemäßen Beispiele überlegen hinsichtlich Fülle, Elastizität und schlagen nicht in den Substratuntergrund weg.

## Patentansprüche

1. Wasserdispergierbare Allylurethane erhältlich durch Umsetzung von 0,15 Mol Hydroxylgruppen eines Vorproduktes A hergestellt aus
1. 0,03 - 0,1 Mol eines Polyethylenglykols mit einem Molekulargewicht von wenigstens 200, aber kleiner als 1000,
2. 0,002 - 0,02 Mol eines Polyethylenglykols mit einem Molekulargewicht von 1000 bis 5000,
3. 0,00 - 0,3 Mol eines ggf. verzweigten Polypropylenglykols mit einem Molekulargewicht von 200 bis 1000 und
4. 0,0 - 0,25 Mol einer Polycarbonsäure oder eines Polycarbonsäure-Derivates
in einem Reaktionsschritt B mit
5. 0,05 - 0,35 Mol der Hydroxyallylverbindung III, und
6. 0,1 - 0,5 Mol Isocyanatgruppen der Isocyanatverbindung IV,
wobei sämtliche Isocyanatgruppen mit Hydroxylgruppen umgesetzt werden.

2. Wasserdispergierbare Allylurethane gemäß Anspruch 1, dadurch gekennzeichnet, daß als Polycarbonsäure bzw. Derivate davon Maleinsäureanhydrid und/oder Adipinsäure, Fumarsäure, Malonsäure, Phthalsäure, Phthalsäureanhydrid, hydrierte Phthalsäurederivate, Itaconsäure, Bernsteinsäure, Valeriansäure und/oder Citronensäure eingesetzt wird.

3. Wasserdispergierbare Allylurethane gemäß wenigstens einem der vorhergehenden Ansprüche, dadurch gekennzeichnet, daß als Isocyanat IV Isophorondiisocyanat, Hexamethylendiisocyanat, Dicyclohexylmethandiisocyanat, MDI oder TDI eingesetzt wird, wobei das Isocyanat gegebenenfalls als Präpolymer vorliegen kann.

4. Wasserdispergierbare Allylurethane gemäß wenigstens einem der vorhergehenden Ansprüche, dadurch gekennzeichnet, daß als Hydroxyallylverbindung III Trimethylolpropandiallylether und/oder Trimethylolpropanmonoallylether, Pentaerythrittriallylether, Glycerinmonoallylether, Glycerindiallylether, Pentaerythritdiallylether eingesetzt wird.

5. Verfahren zur Herstellung eines wasserdispergierbaren Allylurethans gemäß Anspruch 1 durch Umsetzung
A) eines Polyglykolgemisches I oder dessen Umsetzungsproduktes mit einer Polycarbonsäure II oder eines Derivates IIa davon mit
B) einer Hydroxyallylverbindung III und einem Isocyanat IV mit wenigstens zwei NCO-Gruppen,
wobei die Umsetzung so erfolgt, daß keine ionischen Gruppen im Allylurethan erhalten werden.

6. Verfahren zur Herstellung eines Lackes, dadurch gekennzeichnet, daß man ein Allylurethan gemäß wenigstens einem der vorhergehenden Ansprüche 1 bis 4 in Wasser dispergiert und gegebenenfalls mit üblichen Additiven versieht.

7. Verfahren zur Lackierung starrer oder flexibler Substrate, dadurch gekennzeichnet, daß man einen gemäß Anspruch 6 erhaltenen Lack verwendet.

## Claims

1. Water-dispersible allyl urethanes obtainable by reaction of 0.15 mol hydroxyl groups of starting product A of
1. 0.03 - 0.1 mol of a polyethylene glycol having a molecular weight of at least 200, but below 1,000,
2. 0.002 - 0.02 mol of a polyethylene glycol having a molecular weight of 1,000 to 5,000,
3. 0.00 - 0.3 mol of an optionally branched polypropylene glycol having a molecular weight of 2,000 to 1,000 and
4. 0.0 - 0.25 mol of a polycarboxylic acid II or a derivative IIa thereof
with
5. 0.05 - 0.35 mol of the hydroxyallyl compound III and
6. 0.1 - 0.5 mol isocyanate groups of the isocyanate compound IV
in a reaction step B, all the isocyanate groups being reacted with hydroxyl groups.

2. Water-dispersible allyl urethanes as claimed in claim 1, characterized in that maleic anhydride and/or adipic acid, fumaric acid, malonic acid, phthalic acid, phthalic anhydride, hydrogenated phthalic acid derivatives, itaconic acid, succinic acid, valeric acid and/or citric acid is/are used as the polycarboxylic acid or its derivatives.

3. Water-dispersible allyl urethanes as claimed in at least one of the preceding claims, characterized in that isophorone diisocyanate, hexamethylene diisocyanate, dicyclohexyl methane diisocyanate, MDI or TDI, is used, optionally in prepolymer form, as the isocyanate IV.

4. Water-dispersible allyl urethanes as claimed in at least one of the preceding claims, characterized in that trimethylolpropane diallyl ether and/or trimethylolpropane monoallyl ether, pentaerythritol triallyl ether, glycerol monoallyl ether, glycerol diallyl ether, pentaerythritol diallyl ether, is used as the hydroxyallyl compound III.

5. A process for the production of the water-dispersible allyl urethane claimed in claim 1 by reaction of
A) a polyglycol mixture I or reaction products thereof with a polycarboxylic acid II or a derivative IIa thereof with
B) a hydroxyallyl compound III and an isocyanate IV containing at least two NCO groups,
the reaction being carried out in such a way that no ionic groups are obtained in the allyl urethane.

6. A process for the production of a paint, characterized in that an allyl urethane of the type claimed in at least one of claims 1 to 4 is dispersed in water and the resulting dispersion is provided with standard additives.

7. A process for painting rigid or flexible substrates, characterized in that a paint obtained by the process claimed in claim 6 is used.

## Revendications

1. Allyluréthanes aptes être dispersés dans l'eau, que l'on obtient par la mise en réaction de 0,15 mole de groupes hydroxyle d'un produit intermédiaire A préparé à partir de
1. 0,03 - 0,1 mole d'un polyéthylèneglycol ayant un poids moléculaire d'au moins 200, mais inférieur à 1.000,
2. 0,002 - 0,02 mole d'un polyéthylèneglycol ayant un poids moléculaire de 1.000 à 5.000,
3. 0,00 - 0,3 mole d'un polypropylèneglycol éventuellement ramifié ayant un poids moléculaire de 200 à 1.000, et
4. 0,0 - 0,25 mole d'un acide polycarboxylique ou d'un dérivé d'un acide polycarboxylique
dans une étape réactionnelle B avec
5. 0,05 - 0,35 mole du composé d'hydroxyallyle III et
6. 0,1 - 0,5 mole de groupes isocyanate du composé d'isocyanate IV,
tous les groupes isocyanate réagissant avec les groupes hydroxyle.

2. Allyluréthanes aptes à être dispersés dans l'eau selon la revendication 1, caractérisés en ce qu'on met en oeuvre, comme acide polycarboxylique ou comme dérivés de ce dernier, l'anhydride maléique et/ou l'acide adipique, l'acide fumarique, l'acide malonique, l'acide phtalique, l'anhydride phtalique, des dérivés hydrogénés de l'acide phtalique, l'acide itaconique, l'acide succinique, l'acide valérianique et/ou l'acide citrique.

3. Allyluréthanes aptes à être dispersés dans l'eau selon au moins une des revendications précédentes, caractérisés en ce qu'on met en oeuvre, comme isocyanate IV, l'isophoronediisocyanate, l'hexaméthylènediisocyanate, le dicyclohexylméthanediisocyanate, le MDI ou le TDI, l'isocyanate pouvant éventuellement être présent sous forme de prépolymère.

4. Allyluréthanes aptes à être dispersés dans l'eau selon au moins une des revendications précédentes, caractérisés en ce qu'on met en oeuvre, comme composé d'hydroxyallyle III, l'éther diallylique de triméthylolpropane et/ou l'éther monoallylique de triméthylolpropane, l'éther triallylique de pentaérythritol, l'éther monoallylique de glycérine, l'éther diallylique de glycérine, l'éther diallylique de pentaérythritol.

5. Procédé pour la préparation d'un allyluréthane apte à être dispersé dans l'eau, selon la revendication 1, par la mise en réaction de
A) un mélange de polyglycols I ou son produit de mise en réaction avec un acide polycarboxylique II ou encore un dérivé IIa de ce dernier avec
B) un composé d'hydroxyallyle III et un isocyanate IV contenant au moins deux groupes NCO,
la réaction étant mise en oeuvre de telle sorte que l'on n'obtienne aucun groupe ionique dans l'allyluréthane.

6. Procédé pour la préparation d'une laque, d'un vernis ou d'une peinture, caractérisé en ce qu'on disperse dans de l'eau un allyluréthane selon au moins l'une quelconque des revendications précédentes 1 à 4, et on garnit éventuellement avec des additifs habituels.

7. Procédé pour le vernissage de substrats rigides ou flexibles, caractérisé en ce qu'on utilise une laque, un vernis ou une peinture obtenu conformément à la revendication 6.
